# EUROPEAN PATENT APPLICATION

(11) **EP 4 693 671 A1**
(43) Date of publication of application: **11.02.2026**
(21) Application number: 24895163.4
(22) Date of filing: 19.08.2024
(51) Int. Cl.: H01M 50/30

(54) **BATTERY AND BATTERY PACK**

(30) Priority: 24.06.2024 CN 202421457386 U; 24.06.2024 CN 202410822827
(71) Applicant: Eve Power Co., Ltd., Jingmen, Hubei 448000 (CN)
(72) Inventor: SUN, Fei, Jingmen, Hubei 448000 (CN); YUAN, Dingding, Jingmen, Hubei 448000 (CN); CHE, Liyuan, Jingmen, Hubei 448000 (CN)
(74) Representative: Herrero & Asociados, S.L.
(86) International application number: PCT/CN2024/113115
(87) International publication number: WO 2026/000571

(57) **Abstract**

The present disclosure provides a cell and a battery pack. The cell includes a housing, where the housing includes a top wall and a bottom wall arranged opposite to each other, and a plurality of side walls arranged between the top wall and the bottom wall; the top wall is provided with at least one pole; at least one explosion-proof valve arranged on the side wall; where a distance between a center of the anti-explosion valve and the top wall is set to be h, and a height of the side wall is set to be H, where h/H satisfies: 1/4≤h/H≤1/2.

## Description

The present disclosure claims priority to Chinese Patent Application No. 202410822827.4, filed with the Chinese Patent Office on June 24, 2024, the disclosure of which is incorporated herein by reference in its entirety.

### TECHNICAL FIELD

The present disclosure relates to the technical field of batteries, and in particular, to a cell and a battery pack.

### BACKGROUND

Cells in a power battery pack or an energy storage battery pack are provided with explosion-proof valves, which are crucial to the safety performance of the cells. A top of the cell is usually provided with a positive pole and a negative pole, and the explosion-proof valve is usually provided between the positive pole and the negative pole.

### TECHNICAL PROBLEM

In related technologies, when the battery pack is applied in new energy vehicles or energy storage battery cabinets, the height space of a battery cavity in the new energy vehicle or the energy storage battery cabinet available for installing the battery pack is limited. When the explosion-proof valve is arranged on the top of the cell, an exhaust channel needs to be arranged on an upper portion of the explosion-proof valve, and the exhaust channel will further increase a height design dimension of the battery pack, thereby causing the design dimension of the battery pack to exceed an installation height dimension of the battery accommodating cavity of the new energy vehicle or the energy storage battery cabinet.

### TECHNICAL SOLUTION

According to a first aspect, the embodiments of the present disclosure provides a cell. The cell includes:
a housing, where the housing includes a top wall and a bottom wall arranged opposite to each other, and a plurality of side walls arranged between the top wall and the bottom wall, where the top wall is provided with at least one pole; and
at least one explosion-proof valve, wherein the explosion-proof valve is arranged on the side wall;
wherein a distance between a center of the explosion-proof valve and the top wall is set to h, and a height of the side wall is set to H, where h/H satisfies: 1/4≤h/H≤1/2.

According to a second aspect, the embodiments of the present disclosure provides a battery pack. The battery pack includes a box and at least two battery modules arranged inside the box. Each of the battery modules includes the cell. The battery modules include an upper battery module and a lower battery module arranged along a height direction of the box.

### BENEFICIAL EFFECTS

According to the cell provided by the present disclosure, by providing the explosion-proof valve on at least one side wall of the housing, thereby improving that the design dimension of the battery pack exceeds an installation height of a battery accommodating cavity of a new energy vehicle or an energy storage battery cabinet due to the design of the explosion-proof valve on the top of the cell. Furthermore, by setting the ratio of the distance h between the center of the explosion-proof valve and the top wall to the height H of the first side wall, that is, h/H to: 0.25≤h/H≤0.5, the valve opening pressure of the explosion-proof valve is stable, thereby reducing the corrosion of the explosion-proof valve by the electrolyte, and improving the safety performance of the cell.

The battery pack provided in the present application is designed based on the cell, and its beneficial effects can be referred to as the beneficial effects of the cell, which will not be repeated here.

### BRIEF DESCRIPTION OF THE DRAWINGS

FIG. 1 is a three-dimensional schematic structural diagram of a battery pack provided by embodiments of the present disclosure;
FIG. 2a is a front view of a cell provided by an embodiment of the present disclosure;
FIG. 2b is a perspective view of the cell provided by an embodiment of the present disclosure;
FIG. 2c is a side view of a cell provided by an embodiment of the present disclosure;
FIG. 2d is a schematic diagram of surface area dimensions of a side wall and an explosion-proof valve provided by an embodiment of the present disclosure;
FIG. 3a is a side view of a cell provided by yet another embodiment of the present disclosure;
FIG. 3b is a perspective view of the cell provided by yet another embodiment of the present disclosure;
FIG. 4 is a schematic structural diagram of an explosion-proof valve provided by an embodiment of the present disclosure;
FIG. 5 is a schematic structural diagram of an explosion-proof valve provided by another embodiment of the present disclosure;
FIG. 6 is a schematic diagram of an exhaust structure inside a box provided by an embodiment of the present disclosure;
FIG. 7 is a schematic diagram of an exhaust port structure of the box provided by an embodiment of the present disclosure;

Reference numerals:
1, battery pack; 100, battery module; 10, box; 11, side plate; 12, end plate; 13, exhaust channel; 14, through hole; 15, exhaust port; 110, battery cavity; 120, electrical cavity; 20, cell; 21, housing; 211, top wall; 212, bottom wall; 213, side wall; 2131, first side wall; 21311, first side edge; 21312, second side edge; 2132, second side wall; 2133, third side wall; 2134, fourth side wall; 30, connecting piece; 31, pole; 40, explosion-proof valve; 41, first main body portion; 411, first notch portion; 4111, first section; 4112, second section; 4113, third section; 42, first reinforcement portion; 421, first portion; 422, second portion; 423, third portion; 43, second main body portion; 431, second notch portion; 4311, fourth section; 4312, fifth section; 4313, sixth section; 44, second reinforcement portion; 441, fourth portion; 442, fifth portion; 451, first space; 452, second space.

### DETAILED DESCRIPTION

In the present disclosure, unless specified to the contrary, directional terms such as "upper" and "lower" used generally refer to the upper and lower parts of a device in actual use or working state, and specifically refer to orientations of drawing in the accompanying drawings. While "inside" and "outside" refer to an outline of the device.

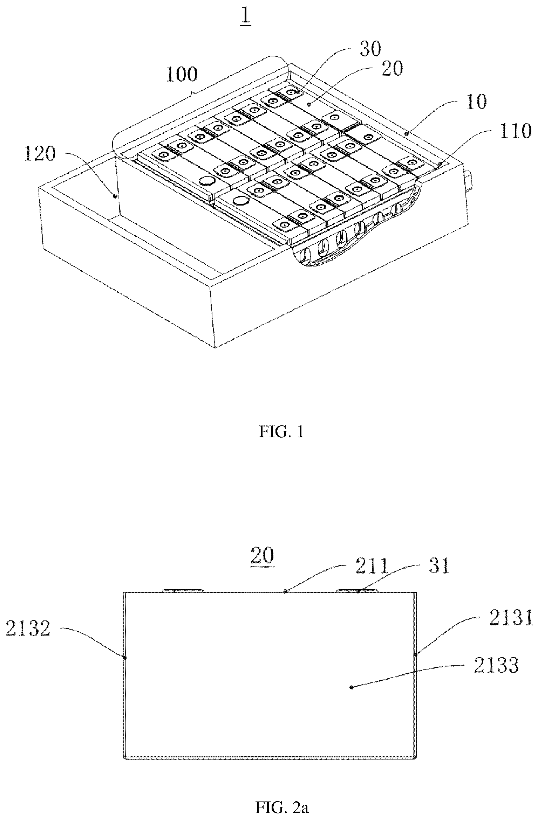

Embodiments of the present disclosure provides a battery pack, which may be a power battery pack. The power battery pack is configured to store electrical energy and serves as a power source for electric vehicles and hybrid vehicles. The battery pack may also be an energy storage battery pack, which includes an energy storage container for storing electrical energy to provide various functions for a power system, such as a smart mobile power grid. As shown in FIG. 1, the battery pack 1 includes a box 10, a plurality of cells 20, and a battery management system (BMS).

The box 10 is configured to fix and protect a plurality of cells and other components. The box 10 can be assembled from several sub-boxes. The material suitable for preparing the box 10has good shock resistance, waterproof and insulation properties, and suitable materials include metal or plastic materials. The box 10 is provided with a hollow inner cavity. The inner cavity of the box 10 can be divided into a battery cavity 110 and an electrical cavity 120. The battery cavity 110 is configured to receive a plurality of cells 20, and the electrical cavity 120 is configured to receive the BMS and other fixed components.

The plurality of cells 20 are arranged in a matrix form in the battery cavity 110. The plurality of cells 20 can be arranged to be connected in series, or, the plurality of unit cells 20 can be arranged to be connected in parallel, or, the plurality of cells 20 can be arranged in a mixed connection of series and parallel, so that the battery pack 1 has a capacity and power suitable for use by electrical equipment. The cell 20 includes a lithium-ion battery, a nickel-hydrogen battery, a lead-acid battery, a lithium iron phosphate battery, or a multi-composite material battery.

The battery pack 1 further includes a plurality of connecting pieces 30. Each connecting piece 30 is configured to connect a positive electrode and a negative electrode of two adjacent cells 20, thereby forming a stable series-parallel connection structure between the positive electrodes and the negative electrodes of the plurality of cells 20. The material for preparing the connecting piece 30 includes copper, aluminum or a composite material of copper and aluminum.

As a power battery pack or an energy storage battery pack, the battery pack further includes the BMS (battery management system), which is configured to monitor, protect, and manage a working state of the battery pack. The BMS can monitor and balance the voltage and the temperature of each cell, and can also control the power and protection functions during charging and discharging of the battery pack.

The embodiments of the present disclosure provides a cell 20, which includes a housing 21, an electrode assembly, and electrolyte.

Taking a square cell 20 as an example, the housing 21 is made of metal materials with certain mechanical strength and corrosion resistance. Suitable metal materials include nickel or steel. The housing 21 has a hollow inner cavity, and the electrode assembly is accommodated in the inner cavity of the housing 21. The housing 21 is configured to fix and protect the electrode assembly.

The electrode assembly includes a positive electrode sheet, a separator and a negative electrode sheet. The separator is arranged between the positive electrode sheet and the negative electrode sheet, and is configured to separate the positive electrode sheet from the negative electrode sheet. The electrode assembly can be formed into a core assembly by winding the positive electrode sheet, the separator and the negative electrode sheet. The electrode assembly can also be formed into a stacked assembly by stacking the positive electrode sheet, the separator and the negative electrode sheet.

The electrolyte is filled inside the cell 20, so that internal structures of the cell such as the positive electrode sheet and the negative electrode sheet are fully soaked in the electrolyte. The electrolyte serves as an ion transmission carrier between the positive electrode sheet and the negative electrode sheet, maintaining continuity of electron transmission inside the cell, so that the cell can be charged and discharged normally.

The housing 21 further includes a top cover assembly, which is connected to a top open end of the housing and is configured to seal the open end of the housing. The top cover assembly is usually provided with a positive pole and a negative pole. The positive electrode sheet is electrically connected to the positive pole through a positive electrode tab, and the negative electrode sheet is electrically connected to the negative pole through a negative electrode tab. Alternatively, the top cover assembly is provided with at least one positive pole. The positive electrode sheet is electrically connected to the positive pole through the positive electrode tab, and the negative electrode sheet is electrically connected to the housing or the negative pole on a bottom of the housing through the negative electrode tab. Alternatively, the top cover assembly is provided with at least one negative pole. The negative electrode sheet is electrically connected to the negative pole through the negative electrode tab, and the positive electrode sheet is electrically connected to the housing or the positive pole on the bottom of the housing through the positive electrode tab.

In related technologies, the cells in the power battery pack or the energy storage battery pack further include explosion-proof valves, which are crucial to the safety performance of the cells. The explosion-proof valve is usually provided on the top cover assembly, and is located between the positive pole and the negative pole, or between two positive poles, or between two negative poles. When the power battery pack is applied in new energy vehicles, the height space of an accommodating cavity in the new energy vehicle available for installing the battery pack is limited. When the explosion-proof valve is arranged on the top of the cell, an exhaust channel needs to be arranged on an upper portion of the explosion-proof valve, and the exhaust channel will further increase a height design dimension of the battery pack, thereby causing the design dimension of the battery pack to exceed an installation height dimension of the battery accommodating cavity of the new energy vehicle.

When the top cover assembly is provided with a plurality of poles, the plurality of poles may be one or both of the positive poles and the negative poles. Due to the limited size of a cover plate of the top cover assembly, the size available for installing explosion-proof valves on the top cover assembly is limited, which restricts the design dimension of the explosion-proof valve and affects the explosion-proof performance of the explosion-proof valve.

When the explosion-proof valve is installed at the bottom of the housing, the explosion-proof valve is soaked by the electrolyte, and is corroded by the electrolyte, thereby affecting its normal use.

In the embodiments of the present disclosure, the structure of the explosion-proof valve is further optimized, to reduce the design dimension of the battery pack exceeding the installation height of the battery accommodating cavity in the new energy vehicle due to the design of the explosion-proof valves on the cells.

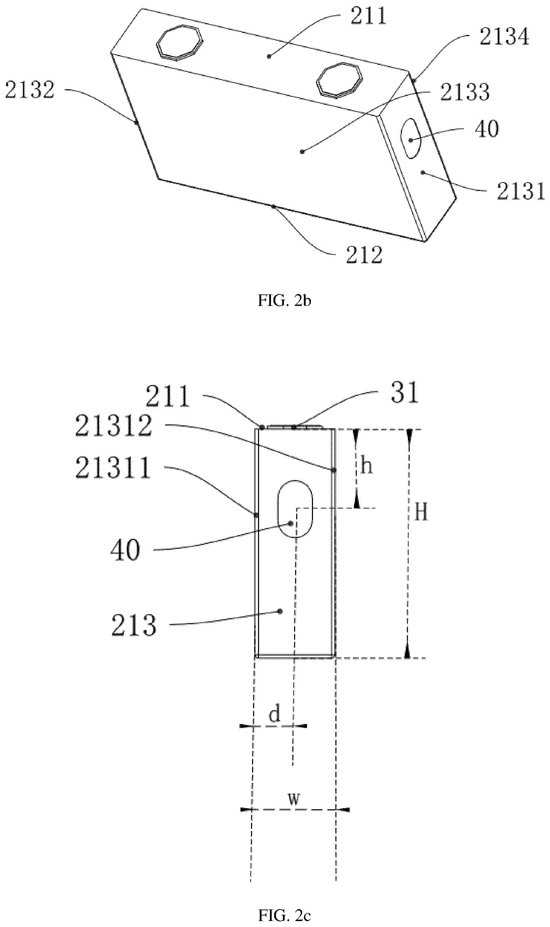

Referring to FIG. 2a, FIG. 2b and FIG. 2c, the housing 21 of the cell 20 includes a top wall 211 and a bottom wall 212 arranged opposite to each other, and a plurality of side walls 213 connected between the top wall 211 and the bottom wall 212. The plurality of side walls 213 include a first side wall 2131 and a second side wall 2132 that are arranged opposite to each other, and a third side wall 2133 and a fourth side wall 2134 arranged opposite to each other. Taking a blade cell as an example, the surface area of the first side wall 2131 and the second side wall 2132 is smaller than the surface area of the third side wall 2133 and the fourth side wall 2134.

In an example, the plurality of side walls 213 and the bottom wall 212 are integrally formed into a main housing having an open structure, and the top wall 211 is provided as the top cover assembly and connected to an opening of the main housing. The top cover assembly usually includes structures such as a cover plate and a lower plastic. The cover plate is welded to the main housing, and the lower plastic is fixed to the cover plate.

The cell 20 further includes a pole 31, which is fixed on the lower plastic. At least two poles 31 are spaced apart on the top wall 211, and the two poles 31 may be positive poles or negative poles, or both.

The cell 20 further includes an explosion-proof valve 40, which is provided on at least one side wall 213. Specifically, the explosion-proof valve 40 is provided as one explosion-proof valve 40 that can be provided on the first side wall 2131 or the second side wall 2132, or the explosion-proof valve 40 is provided as at least two explosion-proof valves 40 that are respectively provided on the first side wall 2131 and the second side wall 2132.

By providing the explosion-proof valve 40 on at least one side wall 213 of the cell 20, it is possible to improve the design dimension of the battery pack exceeding the installation height of the battery accommodating cavity in the new energy vehicle or the energy storage battery cabinet due to the design of the explosion-proof valves on the top of the cells.

Continuing to refer to FIG. 2c, taking the explosion-proof valve 40 provided on the first side wall 2131 as an example, the first side wall 2131 includes a first side edge 21311 and a second side edge 21312 arranged opposite to each other. The top wall 211 is connected to a top end of the first side edge 21311 and a top end of the second side edge 21312. The bottom wall 212 is connected to a bottom end of the first side edge 21311 and a bottom end of the second side edge 21312.

A distance between a center of the explosion-proof valve 40 and the top wall 211 is set to h, and a height of the first side wall 2131 is set to H. In a square cell, the height H of the first side wall 2131 is the distance between the top wall 211 and the bottom wall 212. In a preferred embodiment, a ratio h/H of the distance h between the center of the explosion-proof valve 40 and the top wall 211 to the height H of the first side wall 2131 satisfies: 0.25≤h/H≤0.5. In a specific implementation, h/H can be 0.25, 0.30, 0.35, 0.40, 0.45, 0.5, and a value between any two of the above values, or a range between any two of the above values.

The inventors have found through research that when the ratio of the distance h between the center of the explosion-proof valve 40 and the top wall 211 to the height H of the first side wall 2131, i.e., h/H < 0.25, the distance between the explosion-proof valve 40 and the top wall 211 is too close. The top wall 211 is usually provided as the top cover assembly structure, and the top cover assembly usually includes structures such as a cover plate, a lower plastic, and poles. The poles are fixed on the lower plastic, and the cover plate is welded to the main housing. The explosion-proof valve 40 is usually provided with a notch structure. A high-energy laser is used during a welding process of the cover plate and the main housing. The high heat of the laser will affect the stability of the notch of the explosion-proof valve 40, thereby resulting in unstable valve opening pressure of the explosion-proof valve 40, thereby affecting the safety performance of the cell 20.

The inventors have also found that when the ratio of the distance h between the center of the explosion-proof valve 40 and the top wall 211 to the height H of the first side wall 2131, i.e., h/H>0.5, a distance between the explosion-proof valve 40 and the bottom wall 212 is too close, and the free electrolyte is usually deposited at the bottom of the cell 20, so that the electrolyte will immerse or at least partially immerse the explosion-proof valve 40, and on the one hand, it will corrode the explosion-proof valve 40, thereby affecting the normal opening of the explosion-proof valve 40; on the other hand, after the explosion-proof valve 40 is opened, the explosion-proof valve 40 forms a pressure relief hole, and the electrolyte will be prayed out through the pressure relief hole of the explosion-proof valve 40, thereby causing a risk of combustion, which greatly affects the safety performance of the cell 20.

The inventors have conducted experimental tests on setting positions of the explosion-proof valve 40 and a valve opening pressure range of the explosion-proof valve 40 and found that when the ratio of the distance h between the center of the explosion-proof valve 40 and the top wall 211 to the height H of the side wall 213, that is, h/H satisfies: 0.25≤h/H≤0.5, the valve opening pressure range of the explosion-proof valve 40 is 0.7MPa~0.9MPa. When h/H satisfies: h/H<0.25, or when h/H satisfies: h/H>0.5, the valve opening pressure range of the explosion-proof valve 40 is 0.6MPa ~ 1.0MPa. It can be seen that when h/H satisfies: 0.25≤h/H≤0.5, the stability of the valve opening pressure of the explosion-proof valve 40 is significantly greater than the stability of the valve opening pressure of the explosion-proof valve 40 when h/H<0.25 or h/H>0.5.

In a further preferred implementation, the inventors have found through research that when the ratio of the distance h between the center of the explosion-proof valve 40 and the top wall 211 to the height H of the side wall 213, that is, when the ratio of h/H is set to 1/3, the stability of the valve opening pressure of the explosion-proof valve 40, the influence of the high-energy laser used during welding of the top wall and the side wall on the notch of the explosion-proof valve 40, and the influence of the electrolyte on the corrosion of the explosion-proof valve are in an optimized state, which is beneficial to improving the safety performance of the cell 20.

By providing the explosion-proof valve 40 on at least one side wall 213 of the housing 21, correspondingly, the exhaust channel of the explosion-proof valve 40 does not need to be designed in a top space of the cell, so that the design dimension of the effective battery pack exceeds the installation height of the battery accommodating cavity of the new energy vehicles.

By providing the explosion-proof valve 40 on at least one side wall 213 of the housing 21, and providing the poles 31 on the top wall 211, on the one hand, it can improve that the limited size of the top wall 211, which cannot simultaneously design multiple poles and the explosion-proof valve 40; on the other hand, the explosion-proof valve 40 is designed separately from the pole 31, so that the gas-electric structure of the cell 20 is separated, and the explosion-proof valve 40 can release high-pressure gas generated inside the cell in time, thereby improving the safety performance of the cell.

The explosion-proof valve 40 is provided on the side wall 213, compared with providing the explosion-proof valve 40 on the bottom wall 212, it can effectively improve the corrosion of the explosion-proof valve 40 caused by immersion in electrolyte.

Continuing to refer to FIG. 2c, the first side wall 2131 includes the first side edge 21311 and the second side edge 21312 that are arranged opposite to each other. An interval between the first side edge 21311 and the second side edge 21312 is set to a width w of the first side wall 2131. A distance between the center of the explosion-proof valve 40 and the first side edge 21311 or the second side edge 21312 is set to d. In a preferred implementation, d/w satisfies: 1/3<d/w<2/3. The inventors have studied the ratio of the distance d between the center of the explosion-proof valve 40 and the first side 21311 or the second side 21312 to the width w of the first side wall 2131 where the explosion-proof valve 40 is located, and the valve opening pressure range of the explosion-proof valve 40, and found that when d/w satisfies: d/w≤1/3, or d/w≥2/3, the valve opening pressure of the explosion-proof valve 40 is 0.6MPa~1.0MPa; while when d/w satisfies: 1/3<d/w<2/3, the valve opening pressure of the explosion-proof valve 40 is 0.7MPa~0.9MPa. It can be seen that when d/w satisfies: 1/3<d/w<2/3, the stability of the valve opening pressure of the explosion-proof valve 40 is significantly greater than the stability of the valve opening pressure of the explosion-proof valve 40 when d/w≤1/3 or d/w≥2/3.

In a further preferred implementation, the axis of the center of the explosion-proof valve 40 coincides with the center axis of the first side wall 2131, that is, the distance from the center of the explosion-proof valve 40 to the first side 21311 is the same as the distance from the center of the explosion-proof valve 40 to the second side 21312, that is, d/w=1/2. When d/w=1/2, since the explosion-proof valve 40 is located on the central axis of the first side wall 2131, the distance between the center of the explosion-proof valve 40 and the first side edge 21311 is the same as the distance between the center of the explosion-proof valve 40 and the second side edge 21312, therefore, under the action of internal air pressure of the cell, the deformation amount generated at various parts of the explosion-proof valve 40 is relatively balanced, which is conducive to maintaining the consistency and stability of the valve opening pressure of the explosion-proof valve 40.

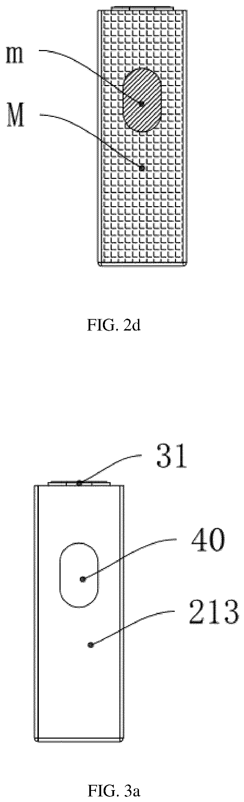

Referring to FIG. 2d, a projection area of the explosion-proof valve 40 on the first side wall 2131 is m, and a surface area of the first side wall 2131 is M. In a preferred embodiment, the ratio of the projection area m of the explosion-proof valve 40 on the first side wall 2131 to the surface area M of the first side wall 2131 is m/M, in which m/M is preferably set to: 0.025≤m/M≤0.2. The ratio of m/M can be 0.03, 0.05, 0.06, 0.08, 0.09, 0.10, 0.11, 0.13, 0.15, 0.16, 0.18, 0.2, and a value between any two of the above values, or a range between any two of the above values.

The inventors have found through research that when the ratio m/M of the projection area m of the explosion-proof valve 40 on the first side wall 2131 to the surface area M of the first side wall 2131 is set to be less than 0.025, the pressure relief area corresponding to the explosion-proof valve 40 is too small, and the exhaust speed of the explosion-proof valve 40 after the valve is opened is slower, which may lead to a risk of explosion of the housing 21. When the ratio m/M of the projection area m of the explosion-proof valve 40 on the first side wall 2131 to the surface area M of the first side wall 2131 is set to be greater than 0.2, the first side wall 2131 where the explosion-proof valve 40 is located needs to be provided with a larger opening area reserved to facilitate the design of the explosion-proof valve, which leads to insufficient strength of the first side wall 2131 itself. Especially in blade cells, when the explosion-proof valve 40 is provided on the first side wall 2131 with a smaller surface area, due to a smaller surface of the first side wall 2131, it is crucial to balance the structural strength of the first side wall 2131 itself and the exhaust speed of the explosion-proof valve 40.

In a further preferred implementation, the ratio of the projection area m of the explosion-proof valve 40 on the first side wall 2131 to the surface area M of the first side wall 2131 is set to 0.08. When m/M is set to 0.08, the cell 20 has an outstanding effect in balancing the opening speed of the explosion-proof valve 40 and maintaining the strength of the housing 21, which is beneficial to improving the overall performance of the cell 20.

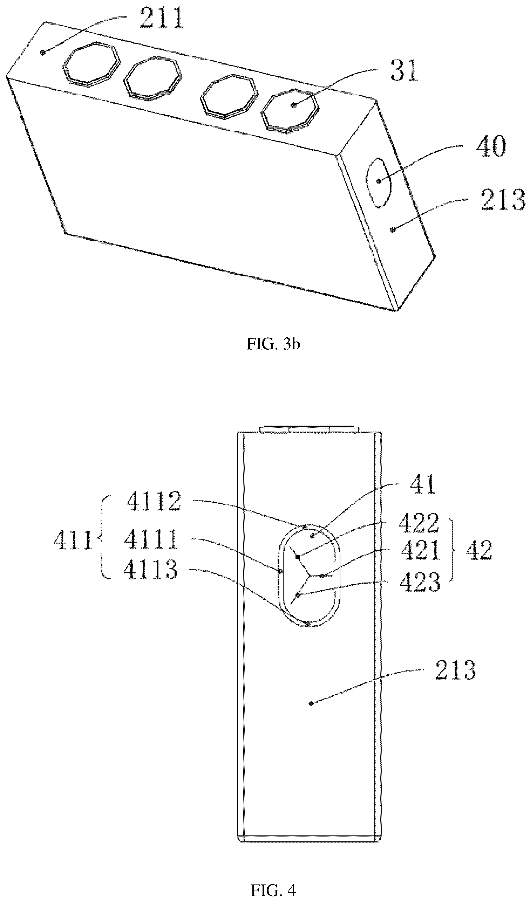

Continuing to refer to FIG. 3a and FIG. 3b, when the top wall 211 is provided with a plurality of poles 31, if the explosion-proof valve 40 is further provided on the top wall 211, and sufficient space cannot be reserved on the top wall 211 for designing the explosion-proof valve 40, the projection area of the explosion-proof valve 40 designed on the top wall 211 will be too small, and the explosion-proof valve 40 designed on the top wall 211 will result in a slower exhaust speed after the valve is opened, further leading to a risk of explosion of the housing 21. Therefore, when the cell top wall 211 is provided with the plurality of poles 31, the explosion-proof valve 40 is preferably arranged on the side wall 213.

Referring to FIG. 2b and FIG. 4, in an embodiment provided in the present disclosure, the side wall 213 is provided with a mounting hole for installing the explosion-proof valve 40. The explosion-proof valve 40 is separately provided from the side wall 213. After the explosion-proof valve 40 is formed separately, the explosion-proof valve 40 is connected to the side wall 213, and the explosion-proof valve 40 is preferably welded to the side wall 213. The explosion-proof valve 40 includes a first main body portion 41 and a first reinforcement portion 42. The first reinforcement portion 42 is located inside the first main body portion 41. The first main body portion 41 is provided with a first notch portion 411. The first notch portion 411 is configured as a non-closed arc shape. The first reinforcement portion 42 is configured to extend inside the first notch portion 411.

When high-pressure airflow is generated inside the cell 20, the explosion-proof valve 40 is deformed under a high-pressure force. Since a wall thickness of the first notch portion 411 is relatively thin, when the pressure value received by the first notch portion 411 exceeds a rated pressure value, the first notch portion 411 may be broken to form a pressure relief port, and the high-pressure airflow inside the cell 20 is discharged through the pressure relief port. By constructing the first notch portion 411 as a non-closed arc shape and providing the first reinforcement portion 42 inside the first notch portion 411, and the first reinforcement portion 42 is configured to enhance the overall structural strength of the explosion-proof valve 40, it can prevent the explosion-proof valve 40 from being severely deformed when subjected to external compression. Furthermore, the first reinforcement portion 42 can also prevent the entire explosion-proof valve 40 from being separated from the side wall 213 and causing serious overflow of the electrolyte after the first notch portion 411 is broken.

Continuing to refer to FIG. 2b and FIG. 4, the first notch portion 411 includes a first section 4111, a second section 4112, and a third section 4113. The first section 4111 is connected between one end of the second section 4112 and one end of the third section 4113. The other end of the second section 4112 and the other end of the third section 4113 are arranged opposite to each other, and the other end of the second section 4112 is spaced apart from the other end of the third section 4113.

The first reinforcement portion 42 includes a first portion 421, a second portion 422 and a third portion 423. One end of the first portion 421, one end of the second portion 422 and one end of the third portion 423 are connected to each other. The other end of the first portion 421 is close to a midpoint of virtual connection line between the other end of the second section 4112 of the first notch portion 411 and the other end of the third section 4113 of the first notch portion 411. The other end of the second portion 422 of the first reinforcement portion 42 is arranged close to the second section 4112 of the first notch portion 411, and the other end of the third portion 423 of the first reinforcement portion 42 is arranged close to the third section 4113 of the first notch portion 411.

By constructing the first notch portion 411 into three sections and constructing the first reinforcement portion 42 into three portions, and each section of the first notch portion 411 being arranged corresponding to a portion of the first reinforcement portion 42, the overall strength of the explosion-proof valve 40 is kept balanced, and the corresponding valve opening thresholds at various locations of the first notch portion 411 are basically kept the same, which is beneficial to maintaining the stability of the overall valve opening pressure of the explosion-proof valve 40.

In a specific implementation, the explosion-proof valve 40 is constructed as an ellipse as a whole. The first section 4111 of the first notch portion 411 is constructed as a straight line, the second section 4112 and the third section 4113 of the first notch portion 411 are constructed as arc sections symmetrically arranged about the first section 4111. The first portion 421, the second portion 422 and the third portion 423 of the first reinforcement portion 42 are all constructed as straight lines, and an intersection of the first portion 421, the second portion 422 and the third portion 423 is substantially located at a center of the first notch portion 411.

The explosion-proof valve 40 is generally formed by stamping an aluminum shell. The wall thickness of the explosion-proof valve 40 itself is relatively thin. Therefore, when the cell is subjected to external compression, the explosion-proof valve 40 connected to the side wall 213 is prone to deformation. In order to improve the deformation of the explosion-proof valve 40, in another embodiment provided in the present disclosure, the explosion-proof valve 40 is configured to be integrally formed with the side wall 213. Since there is no weld between the explosion-proof valve 40 and the side wall 213, it can effectively improve severe deformation of the explosion-proof valve 40 after being subjected to external force.

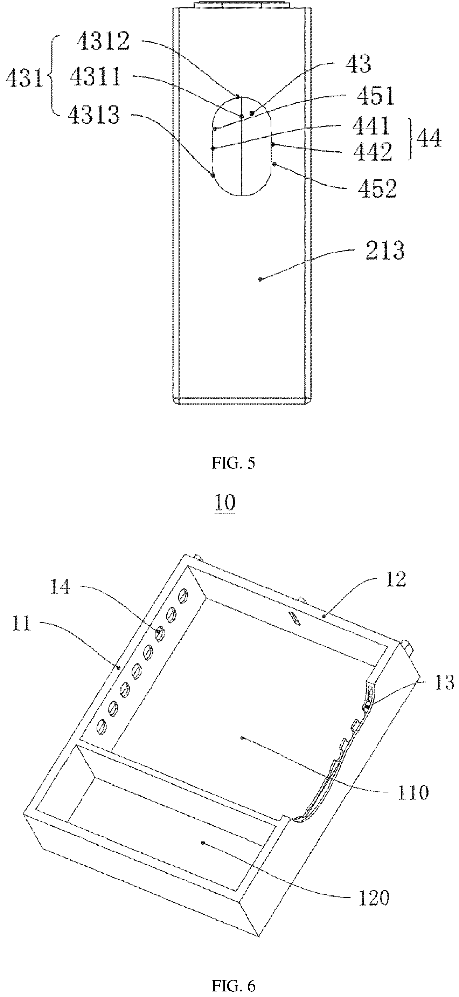

Referring to FIG. 2b and FIG. 5, the explosion-proof valve 40 includes a second main body portion 43 and a second reinforcement portion 44. The second reinforcement portion 44 is located on the second main body portion 43. The second main body portion 43 includes a second notch portion 431. The second notch portion 431 defines at least a partial contour shape of the explosion-proof valve 40, and the second notch portion 431 is constructed as a non-closed arc structure. The second reinforcement portion 44 is arranged close to the second notch portion 431.

By integrally forming the explosion-proof valve 40 and the side wall 213, and configuring the second notch portion 431 of the explosion-proof valve 40 to be formed by stamping on the side wall 213, it can effectively improve severe deformation of the explosion-proof valve 40 after being subjected to external force.

When high-pressure airflow is generated inside the cell 20, the explosion-proof valve 40 is deformed under a high-pressure force. Since a wall thickness of the second notch portion 431 is relatively thin, when the pressure value received by the second notch portion 431 exceeds a rated pressure value, the second notch portion 431 may be broken to form a pressure relief port, and the high-pressure airflow inside the cell 20 is discharged through the pressure relief port. By arranging the second reinforcement portion 44 close to the second notch portion 431, and the second reinforcement portion 44 is configured to enhance the structural strength of the explosion-proof valve 40, it can prevent the explosion-proof valve 40 from being severely deformed when subjected to external compression. Furthermore, the second reinforcement portion 44 can also prevent the entire explosion-proof valve 40 from being separated from the side wall 213 and causing serious overflow of the electrolyte after the second notch portion 431 is broken.

Continuing to refer to FIG. 5, the second notch portion 431 includes a fourth section 4311, a fifth section 4312, and a sixth section 4313. One end of the fourth section 4311 is connected to the fifth section 4312, and the other end of the fourth section 4311 is connected to the sixth section 4313. One end of the fifth section 4312 is arranged opposite to one end of the sixth section 4313 and forms a first space 451. The other end of the fifth section 4312 is arranged opposite to the other end of the sixth section 4313 and forms a second space 452.

The second reinforcement portion 44 includes a fourth portion 441 and a fifth portion 442 which are spaced apart from each other. The fourth portion 441 is arranged in the first space 451, and the fifth portion 442 is arranged in the second space 452.

By constructing the second notch portion 431 into three sections, and constructing the fourth section 4311 of the second notch portion 431 is connected to the fifth section 4312 and the sixth section 4313 of the second notch portion 431 respectively, when the fourth section 4311 is deformed under high pressure, it will further drive the fifth section 4312 and the sixth section 4313 to deform and then break, so that the entire configuration of the second notch portion 431 is conducive to pressure relief. By respectively arranging two portions of the reinforcement portions 44 in the first space 451 and the second space 452 formed at both ends of the fifth section 4312 and the sixth section 4313, the explosion-proof valve 40 can maintain appropriate strength. When the explosion-proof valve 40 is subjected to external force, the explosion-proof valve 40 will not be seriously deformed. When the explosion-proof valve 40 is subjected to internal high pressure and reaches a rated high pressure, the second notch portion 431 of the explosion-proof valve 40 will be broken to form a pressure relief port, but the explosion-proof valve 40 as a whole will not be separated from the side wall 213, thereby avoiding serious overflow of electrolyte.

In a specific implementation, the fifth section 4312 and the sixth section 4313 of the second notch portion 431 are constructed as non-closed arcs, and the two ends of the fifth section 4312 are arranged opposite to the two ends of the sixth section 4313. The fourth section 4311 may be a straight line section, and the fourth section 4311 is located on the central axis of the explosion-proof valve 40, with one end of the fourth section 4311 connected to a midpoint of the fifth section 4312, and the other end of the fourth section 4311 connected to a midpoint of the sixth section 4313. In other alternative examples, the fourth section 4311 can also be two arcs connected to each other, with a connection point of the two arcs located at the center of the explosion-proof valve 40. The two arcs are arranged back to back, and two ends of each arc are respectively connected to the fifth section 4312 and the sixth section 4313, so that the overall structure of the explosion-proof valve 40 is constructed as a centrally symmetrical structure.

The fourth portion 441 and the fifth portion 442 of the second reinforcement portion 44 may be linear or arc-shaped.

The embodiments of the present disclosure further provides a battery pack 1, which includes a box 10 and at least two battery modules 100 arranged inside the box 10. The at least two battery modules 100 include an upper battery module and a lower battery module arranged along a height direction of the box 10, which is beneficial to improve the energy density of the battery pack. Each battery module 100 includes a plurality of cells. At least one side wall of each cell is provided with an explosion-proof valve, and the top wall of each cell is provided with a pole.

For a battery pack in which an upper battery module and a lower battery module are provided, a plurality of cells in the two battery modules are arranged densely. If the top wall of the cell in each battery module is provided with an explosion-proof valve, when thermal runaway occurs in the lower battery module, the explosion-proof valve of the lower battery module will open to discharge high-pressure airflow, which will further impact the upper battery module, thereby causing thermal runaway of the upper battery module, and very likely causing thermal runaway or even thermal explosion of the entire battery pack, thereby greatly reducing the safety performance of the entire battery pack.

However, in the embodiments of the present disclosure, the explosion-proof valve of each cell in the battery pack in which the upper battery module and the lower battery module are provided is arranged on the side wall of the cell, and when thermal runaway occurs in the lower battery module, the high-pressure airflow derived from the opening of the explosion-proof valve flows into both sides of the box, thereby effectively reducing the impact on the upper battery module.

Referring to FIG. 6, the box 10 of the battery pack 1 includes a plurality of side plates 11 that enclose the battery cavity 110. The side plate 11 includes an inner layer plate and an outer layer plate, a hollow cavity is provided between the inner layer plate and the outer layer plate, and an interval between the inner layer plate and the outer layer plate is provided as an exhaust channel 13. The inner layer plate is provided with a plurality of through holes 14. The plurality of through holes 14 are provided in a one-to-one correspondence with the plurality of explosion-proof valves 40 provided on the plurality of cells 20. The through holes 14 are configured to communicate the explosion-proof valves 40 with the exhaust channel 13.

When thermal runaway occurs in some of the cells 20 in the battery pack 1, the explosion-proof valves 40 where these cells 20 are located are all arranged on the side walls 213. By correspondingly arranging through holes 14 and exhaust channel 13 on the side plate 11 of the box 10, the high-pressure airflow discharged from the opened explosion-proof valves 40 where these cells 20 are located enters the exhaust channels 13 through the through holes 14, thereby reducing the impact of the thermal runaway of these cells 20 on other cells 20 inside the battery pack 1.

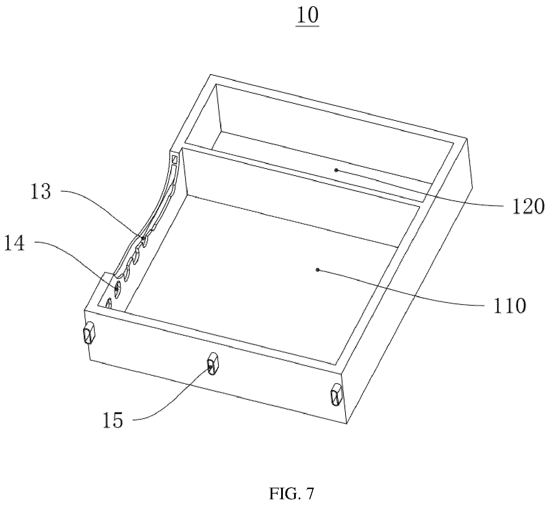

Referring to FIG. 7, the box 10 further includes an end plate 12 connected to one end of the side plate 11. The end plate 12 is provided with a hollow inner cavity. The inner cavity of the end plate 12 is in communication with the inner cavity of the side plate 11. The end plate 12 is further provided with at least one exhaust port 15. The exhaust port 15 is configured to discharge the gas inside the exhaust channel 13. Alternatively, the exhaust port 15 may also be provided on the side plate 11. Alternatively, when a plurality of exhaust ports 15 are provided, some of the exhaust ports 15 are provided on the side plate 11, and some of the exhaust ports 15 are provided on the end panel 12. The positions of the exhaust ports 15 are designed and adjusted according to installation conditions of the equipment inside the battery accommodation cavity of the new energy vehicle or the energy storage battery cabinet to which the battery pack 1 is applicable.

The high-pressure airflow discharged through the explosion-proof valve 40 escapes to the outside of the box 10 through the through hole 14, the exhaust channel 13 and the exhaust port 15, thereby preventing thermal runaway from occurring inside the box 10.

Continuing to refer to FIG. 6 and FIG. 7, the battery cavity 110 and the electrical cavity 120 inside the box 10 are separately arranged, the battery cavity 110 is configured to accommodate the battery modules, and the electrical cavity 120 is configured to accommodate the BMS. The exhaust channel 13 is arranged on one side of the battery cavity 110 without extending to the side where the electrical cavity 120 is located.

By configuring the exhaust channel 13 to extend only on one side of the battery cavity 110, it is helpful to reduce the impact of the high-pressure airflow on the stable operation of components such as the BMS or a high-voltage box arranged inside the electrical cavity 120.

### Experimental verification

The present disclosure further provides embodiments and comparative examples to test the valve opening pressure of the cell. Setting parameters of the explosion-proof valve of the cell provided in the embodiments and the comparative examples are as shown in the following table 1 and table 2.

A test method for valve opening pressure includes: clamping two side surfaces with larger surface area of the cell by using steel plates to simulate a state of the cell in a battery pack; drilling a hole on the top wall of the cell; pumping air into the cell through the hole at a boosting speed of 0.03 MPa/s until the valve opens; and recording an air pressure value.

**Table 1 test record table of valve opening pressure for explosion-proof valve of cell**

| No. | h (mm) | H (mm) | h/H | Valve opening pressure (MPa) |
|---|---|---|---|---|
| Experimental example 1 | 71 | 200 | 0.37 | 0.76 |
| Experimental example 2 | 81 | 200 | 0.405 | 0.84 |
| Experimental example 3 | 100 | 200 | 0.5 | 0.9 |
| Experimental example 4 | 50 | 200 | 0.25 | 0.7 |
| Experimental example 5 | 90 | 200 | 0.45 | 0.85 |
| Comparative example1 | 42 | 200 | 0.21 | 0.7 |
| Comparative example2 | 20 | 200 | 0.1 | 0.61 |
| Comparative example3 | 120 | 200 | 0.6 | 0.94 |
| Comparative example4 | 102 | 200 | 0.51 | 0.92 |
| Comparative example5 | 172 | 200 | 0.86 | 1.0 |

The h in table 1 is set as the height from the center of the explosion-proof valve to the top wall of the cell, and H is the height of the cell. According to the test data of the valve opening pressure in table 1, it can be seen that when h/H satisfies: 1/4≤h/H≤1/2, the valve opening pressure of the explosion-proof valve is 0.7MPa~0.9MPa. When h/H is set to: h/H<1/4 or h/H> 1/2, the valve opening pressure of the explosion-proof valve is 0.6MPa~1.0MPa. Therefore, when the position of the explosion-proof valve satisfies 1/4≤h/H≤1/2, the valve opening pressure of the explosion-proof valve is relatively stable.

**Table 2 test record table of valve opening pressure of explosion-proof valve of cell**

| No. | d (mm) | W (mm) | d/W | Valve opening pressure (MPa) |
|---|---|---|---|---|
| Experimental example 1 | 24 | 71 | 0.34 | 0.73 |
| Experimental example 2 | 43 | 71 | 0.6 | 0.9 |
| Experimental example 3 | 36 | 71 | 0.5 | 0.85 |
| Experimental example 4 | 27 | 71 | 0.37 | 0.78 |
| Experimental example 5 | 34 | 71 | 0.48 | 0.8 |
| Comparative example 1 | 15 | 71 | 0.21 | 0.7 |
| Comparative example2 | 7 | 71 | 0.1 | 0.62 |
| Comparative example3 | 50 | 71 | 0.7 | 0.94 |
| Comparative example4 | 57 | 71 | 0.8 | 1.0 |
| Comparative example5 | 22 | 71 | 0.31 | 0.68 |

The d in table 2 is set as the distance between the center of the explosion-proof valve and the side edge of the cell, and W is the width of the side wall of the cell. According to the test data of the valve opening pressure in table 2, it can be seen that when d/W satisfies: 1/3<d/w<2/3, the valve opening pressure of the explosion-proof valve is 0.7MPa~0.9MPa. When d/W is set to d/w greater than or equal to 1/3, or d/w greater than or equal to 2/3, the valve opening pressure of the explosion-proof valve is 0.6MPa~1.0MPa. Therefore, when the position of the explosion-proof valve satisfies 1/3<d/w<2/3, the valve opening pressure of the explosion-proof valve is relatively stable.

## Claims

1. A cell (20), comprising:
a housing (21), wherein the housing comprises a top wall (211) and a bottom wall (212) arranged opposite to each other, and a plurality of side walls (213) arranged between the top wall (211) and the bottom wall (212); wherein the top wall (211) is provided with at least one pole (31); and
at least one explosion-proof valve (40) arranged on the side wall (213);
wherein a distance between a center of the explosion-proof valve (40) and the top wall (211) is set to h, and a height of the side wall (213) is set to H, wherein h/H satisfies: 1/4≤h/H≤1/2.

2. The cell (20) according to claim 1, wherein the side wall (213) comprises a first side edge (21311) and a second side edge (21312) that are arranged opposite to each other; an interval between the first side edge (21311) and the second side edge (21312) is set to be a width w of the side wall (213), and a distance between the center of the explosion-proof valve (40) and the first side edge (21311) or the second side edge (21312) is set to d, wherein d/w satisfies: 1/3<d/w<2/3.

3. The cell (20) according to claim 2, wherein a projection area of the explosion-proof valve (40) on the side wall (213) is m, a surface area of the side wall (213) is M, wherein m/M satisfies: 0.025≤m/M≤0.2.

4. The cell (20) according to claim 3, wherein h/H=1/3, and/or, d/w=1/2, and/or, m/M=0.08.

5. The cell (20) according to any one of claims 1 to 4, wherein the explosion-proof valve (40) is separately provided from the side wall (213), and is connected to the side wall (213); the explosion-proof valve (40) comprises a first main body portion (41) and a first reinforcing portion (42) located on the first main body portion (41); wherein the first main body portion (41) is provided with a first notch portion (411); wherein the first notch portion (411) is configured to be in a non-closed arc shape; the first reinforcing portion (42) is configured to extend inside the first notch portion (411).

6. The cell (20) according to claim 5, wherein the first notch portion (411) comprises a first section (4111), a second section (4112) and a third section (4113); wherein the first section (4111) is connected between one end of the second section (4112) and one end of the third section (4113); the other end of the second section (4112) and the other end of the third section (4113) are arranged opposite to each other; the first reinforcement portion (42) comprises a first portion (421), a second portion (422) and a third portion (423); wherein one end of the first portion (421), one end of the second portion (422) and one end of the third portion (423) are connected to each other; the other end of the first section (421) is close to a midpoint of a virtual connection line between the other end of the second section (4112) and the other end of the third section (4113); the other end of the second portion (422) is close to the second section (4112), and the other end of the third portion (423) is close to the third section (4113).

7. The cell (20) according to any one of claims 1 to 4, wherein the explosion-proof valve (40) is configured to be integrally formed with the side wall (213); the explosion-proof valve (40) comprises a second main body portion (43) and a second reinforcement portion (44) located on the second main body portion (43); wherein the second main body portion (43) is provided with a second notch portion (431); wherein the second reinforcement portion (44) is arranged close to the second notch portion (431).

8. The cell (20) according to claim 7, wherein the second notch portion (431) comprises a fourth section (4311), a fifth section (4312), and a sixth section (4313); wherein one end of the fourth section (4311) is connected to the fifth section (4312), and the other end of the fourth section (4311) is connected to the sixth section (4313); both ends of the fifth section (4312) and both ends of the sixth section (4313) are oppositely arranged to form a first space (451) and a second space (452); the second reinforcement portion (44) comprises a fourth portion (441) and a fifth portion (442) which are arranged at intervals; wherein the fourth portion (441) is arranged in the first space (451), the fifth portion (442) is arranged in the second space (452).

9. The cell (20) according to claim 1, wherein the plurality of side walls (213) comprise a first side wall (2131) and a second side wall (2132) that are arranged opposite to each other, and a third side wall (2133) and a fourth side wall (2134) arranged opposite to each other; wherein a surface area of the first side wall (2131) or the second side wall (2132) is less than a surface area of the third side wall (2133) or the fourth side wall (2134); the explosion-proof valve (40) is provided on the first side wall (2131) or the second side wall (2132).

10. The cell (20) according to claim 9, wherein at least two explosion-proof valves (40) are provided, and the at least two explosion-proof valves (40) are respectively provided on the first side wall (2131) and the second side wall (2132).

11. A battery pack, the battery pack comprising a box (10) and at least two battery modules (100) arranged inside the box (10); wherein each of the battery modules (100) comprises a plurality of cells (20) according to any one of claims 1 to 10.

12. The battery pack according to claim 11, wherein the battery modules (100) comprise an upper battery module and a lower battery module arranged along a height direction of the box (10).

13. The battery pack of claim 11, wherein the box (10) comprises side plates (11); wherein the side plate (11) is provided with an exhaust channel (13) and a plurality of through holes (14); wherein the plurality of through holes (14) are provided in a one-to-one correspondence with a plurality of explosion-proof valves (40), and the through holes (14) are configured to communicate the explosion-proof valves (40) with the exhaust channel (13).

14. The battery pack according to claim 13, wherein the box (10) further comprises an end plate (12) connected to one end of the side plate (11); wherein the end plate (12) is further provided with at least one exhaust port (15); wherein the exhaust port (15) is configured to discharge gas inside the exhaust channel (13); and/or, the exhaust port (15) is provided on the side plate (11).

15. The battery pack according to claim 13, wherein the box (10) comprises a battery cavity (110) and an electrical cavity (120) that are arranged at intervals; wherein the battery cavity (110) is configured to accommodate the battery module, and the electrical cavity (120) is configured to accommodate a battery management system; wherein the exhaust channel (13) is arranged in a cavity wall of the battery cavity (110).
